# EUROPEAN PATENT APPLICATION

(11) **EP 2 636 867 A1**
(43) Date of publication of application: **11.09.2013**
(21) Application number: 12185173.7
(22) Date of filing: 20.09.2012
(51) Int. Cl.: F02B 29/04, F01K 23/06, F01K 23/10, F02G 5/02, F02G 5/04, F01N 5/02, F02B 37/00, F02M 25/07

(54) **Waste heat recovery system**

(30) Priority: 26.09.2011 JP 2011209745; 16.04.2012 JP 2012092809
(71) Applicant: Kabushiki Kaisha Toyota Jidoshokki, Kariya-shi, Aichi 448-8671 (JP)
(72) Inventor: Mori, Hidefumi, Kariya-shi,, Aichi 448-8671 (JP); Iguchi, Masao, Kariya-shi,, Aichi 448-8671 (JP); Enokijima, Fuminobu, Kariya-shi,, Aichi 448-8671 (JP); Ishiguro, Fumihiko, Kariya-shi,, Aichi 448-8671 (JP)
(74) Representative: TBK

(57) **Abstract**

A waste heat recovery system is for use with a power unit that includes an internal combustion engine (5). The waste heat recovery system includes a Rankine cycle device in which working fluid circulates through a pump (20A), a boiler (23), an expander (25) and then through a condenser (27), heat exchange occurs in the boiler between the working fluid and intake fluid (14, 15) that is introduced into the internal combustion engine while being cooled, a determination device for determining required cooling load for the intake fluid, a pressure reducing device (35) for reducing evaporation pressure in the Rankine cycle device, and a controller (11A) for controlling the pressure reducing device so as to reduce the evaporation pressure below a predetermined evaporation pressure if the required cooling load determined by the determination device exceeds a threshold.

## Description

### BACKGROUND OF THE INVENTION

The present invention relates to a waste heat recovery system.

Japanese Unexamined Patent Application Publication No. 2007-239513 discloses a waste heat recovery system used with a power unit and having a Rankine cycle device in which working fluid circulates. The power unit has an internal combustion engine and an exhaust gas recirculation passage through which part of the exhaust gas exiting the engine is recirculated into the engine as recirculation exhaust gas. The Rankine cycle device has a pump, an exhaust gas boiler, an expander, a condenser and a tube. In the exhaust gas boiler, the working fluid is heated by heat exchange with recirculation exhaust gas. Working fluid is circulated through the pump, the exhaust gas boiler, the expander and then the condenser which are connected by the tube.

Japanese Unexamined Patent Application Publication No. 2008-8224 discloses another waste heat recovery system used with a power unit and having a Rankine cycle device in which working fluid circulates. The power unit has an internal combustion engine and a turbocharger. The turbocharger supplies compressed air to the engine. The Rankine cycle device has a pump, a coolant boiler, a compressed air boiler, an expander, a condenser and a tube. In the coolant boiler, working fluid is heated by heat exchange with engine coolant. In the compressed air boiler, the working fluid is heated by heat exchange with compressed air. Working fluid is circulated through the pump, the coolant boiler, the compressed air boiler, the expander and the condenser which are connected by the tube.

In such waste heat recovery systems, since the recirculation exhaust gas and the compressed air both have a high temperature, the working fluid can be suitably heated by the exhaust gas boiler and the compressed air boiler. This offers increased recovery of energy in the Rankine cycle device and improved performance of the waste heat recovery system.

In addition, since the recirculation exhaust gas and the compressed air are cooled by heat exchange in the exhaust gas boiler and in the compressed air boiler, respectively, high-density recirculation exhaust gas and compressed air can be supplied to the engine. Such cooling of the compressed air results in increased engine output, and such cooling of the recirculation exhaust gas results in reduction of nitrogen oxides in the exhaust gas discharged into the atmosphere.

However, in the above-described systems, the Rankine cycle device is merely operated in a fixed pattern in accordance with the process on a Mollier diagram. If the temperature of recirculation exhaust gas exiting the exhaust gas boiler or the temperature of compressed air exiting the compressed air boiler exceeds a predetermined threshold and the required cooling load for such recirculation exhaust gas or compressed air is large, the recirculation exhaust gas or the compressed air cannot be sufficiently cooled in the exhaust gas boiler or in the compressed air boiler. Thus, there is a fear that the required engine output cannot be obtained due to such insufficient cooling of compressed air and also that nitrogen oxides in exhaust gas cannot be efficiently reduced due to such insufficient cooling of recirculation exhaust gas.

The present invention is directed to providing a waste heat recovery system that offers increased recovery of energy in the Rankine cycle device and improved performance of the power unit.

### SUMMARY OF THE INVENTION

In accordance with an aspect of the present invention, a waste heat recovery system is for use with a power unit that includes an internal combustion engine. The waste heat recovery system includes a Rankine cycle device in which working fluid circulates through a pump, a boiler, an expander and then through a condenser, heat exchange occurs in the boiler between the working fluid and intake fluid that is introduced into the internal combustion engine while being cooled, a determination device for determining required cooling load for the intake fluid, a pressure reducing device for reducing evaporation pressure in the Rankine cycle device, and a controller for controlling the pressure reducing device so as to reduce the evaporation pressure below a predetermined evaporation pressure if the required cooling load determined by the determination device exceeds a threshold.

Other aspects and advantages of the invention will become apparent from the following description, taken in conjunction with the accompanying drawings, illustrating by way of example the principles of the invention.

### BRIEF DESCRIPTION OF THE DRAWINGS

Fig. 1 is a schematic view of a waste heat recovery system according to a first embodiment of the present invention;
Fig. 2 is a Mollier diagram showing the operation of the waste heat recovery system of the first embodiment and also of second and third embodiments;
Fig. 3 is a diagram showing the temperature of working fluid and compressed air in the waste heat recovery system of the first embodiment;
Fig. 4 is a schematic view of the second embodiment of the waste heat recovery system;
Fig. 5 is a schematic view of the third embodiment of the waste heat recovery system;
Fig. 6 is a schematic view of the fourth embodiment of the waste heat recovery system;
Fig. 7 is a Mollier diagram showing the operation of the waste heat recovery system of the fourth embodiment and also of fifth, sixth, seventh, eighth and ninth embodiments;
Fig. 8 is a diagram showing the temperature of working fluid and recirculation exhaust gas in the waste heat recovery system of the fourth embodiment;
Fig. 9 is a schematic view of the fifth embodiment of the waste heat recovery system;
Fig. 10 is a schematic view of the sixth embodiment of the waste heat recovery system;
Fig. 11 is a schematic view of the seventh embodiment of the waste heat recovery system;
Fig. 12 is a schematic view of the eighth embodiment of the waste heat recovery system; and
Fig. 13 is a schematic view of the ninth embodiment of the waste heat recovery system.

### DETAILED DESCRIPTION OF THE EMBODIMENTS

The following will describe the embodiments of the waste heat recovery system according to the present invention with reference to the accompanying drawings.

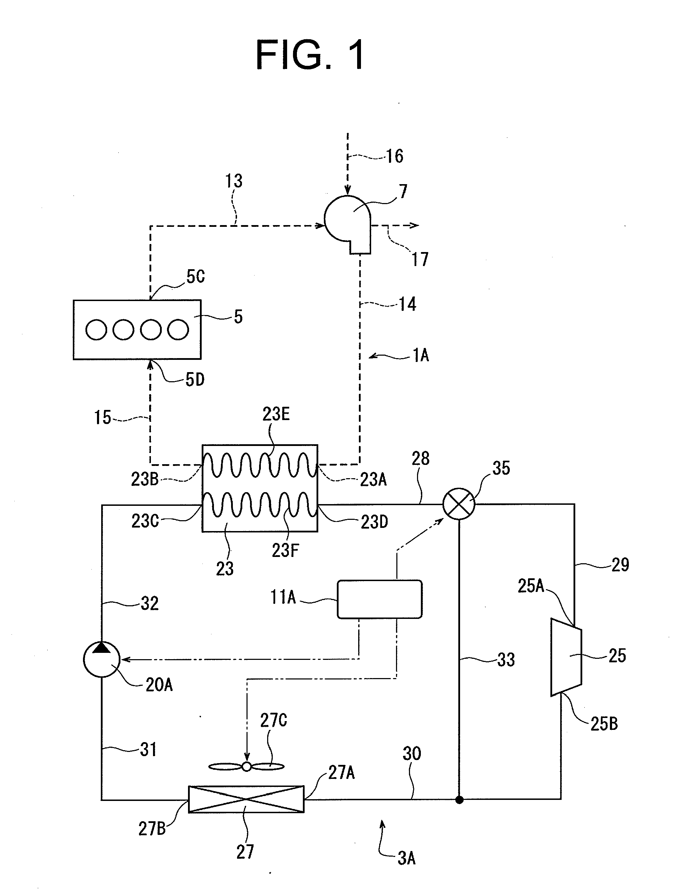

Referring to Fig. 1, the waste heat recovery system of the first embodiment is installed in a vehicle and used with a power unit 1A of the vehicle. The waste heat recovery system includes a Rankine cycle device 3A, a bypass passage 33, a regulator valve 35 and a controller 11A. The bypass passage 33 and the regulator valve 35 correspond to the pressure reducing device of the present invention. The controller 11A corresponds to the determination device of the present invention.

The power unit 1A has an internal combustion engine 5 and a turbocharger 7 as a forced-induction compressor. The engine 5 is a conventional water-cooled gasoline engine having a water jacket (not shown) through which coolant flows. The engine 5 has an outlet 5C for discharging exhaust gas and an inlet 5D for introducing compressed air.

The turbocharger 7 is of a widely used type. The turbocharger 7 is driven by the exhaust gas exiting the engine 5 to compress the intake air. Compressed air is supplied as intake fluid to the engine 5.

The engine 5 and the turbocharger 7 are connected by tubes 13 to 15. The tubes 14, 15 through which compressed air flows are connected to a boiler 23 of the Rankine cycle device 3A which is described in detail below. The boiler 23 has a first inlet 23A and a first outlet 23B. The tube 13 through which exhaust gas flows is connected to the outlet 5C of the engine 5 and the turbocharger 7. The tube 14 is connected to the turbocharger 7 and the first inlet 23A of the boiler 23. The tube 15 is connected to the first outlet 23B of the boiler 23 and the inlet 5D of the engine 5.

The turbocharger 7 is connected also to tubes 16, 17. Although not shown in the drawing, the tube 16 is connected to an air intake and the tube 17 is connected to a muffler of the vehicle. The tube 16 is connected through the turbocharger 7 to the tube 14. The tube 17 is connected through the turbocharger 7 to the tube 13.

The Rankine cycle device 3A includes the aforementioned boiler 23, a pump 20A, an expander 25, a condenser 27 and tubes 28 to 32. The above-mentioned bypass passage 33 and regulator valve 35 are integrated in the Rankine cycle device 3A. The tubes 28 to 32 and the bypass passage 33 cooperate to form a fluid circuit through which HFC134a refrigerant as working fluid flows. The pump 20A is an electrically operated pump of constant speed and displacement.

The boiler 23 has a second inlet 23C and a second outlet 23D, as well as the aforementioned first inlet 23A and first outlet 23B. The boiler 23 is formed therein with a first passage 23E connecting between the first inlet 23A and the first outlet 23B and a second passage 23F connecting between the second inlet 23C and the second outlet 23D. In the boiler 23, heat exchange occurs between the compressed air flowing in the first passage 23E and the working fluid flowing in the second passage 23F, so that the compressed air is cooled and the working fluid is heated.

The expander 25 has an inlet 25A and an outlet 25B through which working fluid flows into and out of the expander 25. The working fluid heated by the boiler 23 is expanded in the expander 25 to generate mechanical rotation power. The generated mechanical rotation power is used to generate electric power in a dynamo (not shown) connected to the expander 25. The generated electric power is stored in a battery (not shown).

The condenser 27 has an inlet 27A and an outlet 27B through which working fluid flows into and out of the condenser 27. In the condenser 27, the working fluid expanded and evaporated in the expander 25 is cooled and liquefied by heat exchange with the air outside the vehicle or outdoor air. An electrically operated fan 27C is provided adjacent to the condenser 27 and electrically connected to the controller 11A.

The pump 20A, the boiler 23, the expander 25 and the condenser 27 are connected by the tubes 28 to 32. Specifically, the tube 32 connects between the pump 20A and the second inlet 23C of the boiler 23. The tube 28 connects between the second outlet 23D of the boiler 23 and the regulator valve 35. The tube 29 connects between the regulator valve 35 and the inlet 25A of the expander 25. The tube 30 connects between the outlet 25B of the expander 25 and the inlet 27A of the condenser 27. The tube 31 connects between the outlet 27B of the condenser 27 and the pump 20A.

The regulator valve 35 is provided between the tubes 28, 29. The bypass passage 33 is connected at one end thereof to the regulator valve 35 and at the other end thereof to the tube 30 thereby to bypass the expander 25. The regulator valve 35 serves to adjust the flow rate of the working fluid flowing into the expander 25 and the flow rate of the working fluid flowing into the bypass passage 33. The regulator valve 35 is electrically connected to the controller 11A.

In the Rankine cycle device 3A, the pump 20A is operated to discharge working fluid into the tube 32 at a constant flow rate. Working fluid is circulated through the boiler 23, the expander 25 and then through the condenser 27 which are connected by the tubes 28 to 32, with the flow rate of the working fluid flowing into the expander 25 and the flow rate of the working fluid flowing into the bypass passage 33 adjusted by the regulator valve 35.

The controller 11A controls the operation of the fan 27C in such a way that the amount of heat released from the working fluid into the outdoor air is properly adjusted. The controller 11A controls also the operation of the pump 20A. The controller 11A monitors the accelerator pedal position of the vehicle using a signal, for example, from an electric control unit or ECU (not shown) of the vehicle. Based on the monitored accelerator pedal position, the controller 11A determines the required output of the engine 5. Based on the required output of the engine 5, the controller 11A determines the required cooling load for cooling the compressed air. Based on the determined required cooling load, the controller 11A adjusts the regulator valve 35. The controller 11A functions as a sensor for monitoring required output of the engine 5.

The following will describe the operation of the waste heat recovery system of the present embodiment.

While the engine 5 of the power unit 1A is operating to drive the vehicle, exhaust gas exiting the outlet 5C of the engine 5 is delivered through the tube 13, the turbocharger 7 and the tube 17 and discharged from the muffler (not shown) into the outdoor air. The turbocharger 7 is driven by the exhaust gas, so that the outdoor air is drawn through the tube 16 into the turbocharger 7 and then compressed therein. Compressed air is delivered through the tube 14, the first passage 23E of the boiler 23 and the tube 15 and then introduced into the engine 5 through the inlet 5D.

In the Rankine cycle device 3A, the controller 11A adjusts the regulator valve 35. If the required output of the engine 5, that is, the monitored accelerator pedal position is at or below a predetermined value, the controller 11A determines that required cooling load for compressed air is at or below a predetermined threshold. The controller 11A controls the regulator valve 35 so that the tube 28 is connected to the tube 29 while the tubes 28, 29 are disconnected from the bypass passage 33.

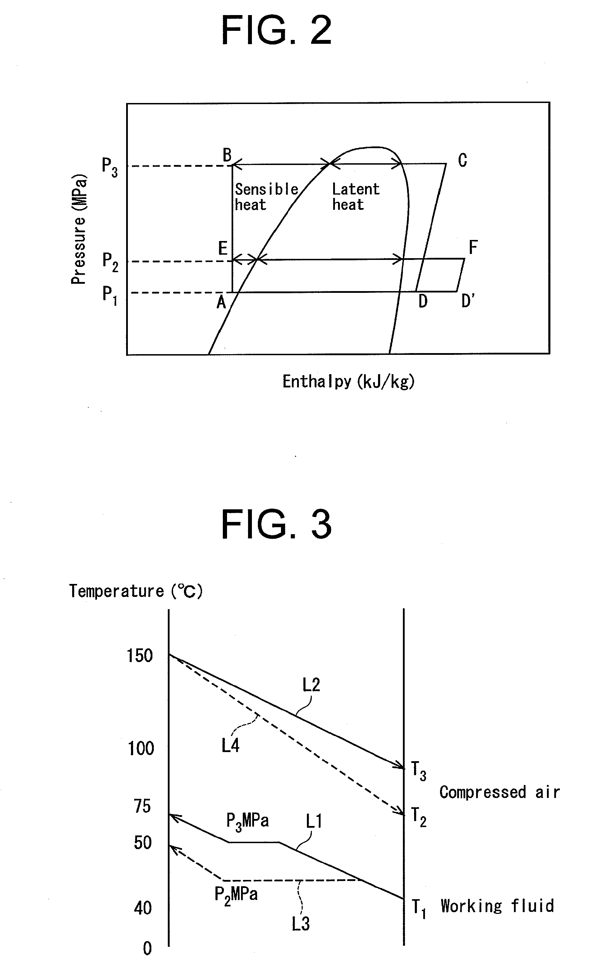

Working fluid in the tube 31 is pumped by the pump 20A into the tube 32. In this case, the state of the working fluid shifts from state A to state B along the isentrope, and the pressure of the working fluid becomes high, as shown in the diagram of Fig. 2. Referring back to Fig. 1, the working fluid flowing through the tube 32 then enters into the boiler 23, where heat exchange occurs between the working fluid and the compressed air flowing through the first passage 23E of the boiler 23. Since the compressed air after exiting the turbocharger 7 has a temperature of about 150 degrees C, the working fluid flowing through the second passage 23F of the boiler 23 is heated to a level of a certain range. In this case, the state of the working fluid shifts from state B to state C along the isobar, and the working fluid has a high temperature and a high evaporation pressure P3 (see Fig. 2). This evaporation pressure P3 corresponds to a predetermined evaporation pressure in the waste heat recovery system. The compressed air flowing in the first passage 23E is cooled by releasing heat to the working fluid flowing in the second passage 23F, and then delivered to the engine 5.

After being heated by the boiler 23, high-temperature and high-pressure working fluid exiting the second outlet 23D flows through the tubes 28, 29 and enters the expander 25 through its inlet 25A. The working fluid is decompressed or expanded in the expander 25 thereby to generate pressure energy that is used to generate electric power in the dynamo connected to the expander 25. In this case, the state of the working fluid shifts from state C to state D along the isentrope, and the working fluid has a high temperature and a low condensation pressure P1 (see Fig. 2).

After being decompressed in the expander 25, the working fluid exiting the outlet 25B and flowing through the tube 30 then enters the condenser 27 through its inlet 27A. The working fluid is cooled in the condenser 27 by releasing heat to the surrounding air. The controller 11A controls the fan 27C so that the working fluid is suitably cooled and liquefied. In this case, the state of the working fluid shifts from state D to state A along the isobar (see Fig. 2). The cooled working fluid exiting the outlet 27B and flowing through the tube 31 returns back to the pump 20A.

In the operation in which the state of working fluid shifts from state A through state B, state C and state D to state A, while the state of working fluid shifts from state B to state C, the sensible heat region is long, and the latent heat region is short, as shown in Fig. 2. Referring to the diagram of Fig. 3, the working fluid is heated from temperature T1 to a temperature of about 75 degrees C through the line L1, and the compressed air of a temperature of about 150 degrees C is cooled to temperature T3 through the line L2. Thus, since the working fluid has high evaporation pressure, a larger amount of energy can be recovered in the Rankine cycle device 3A, thereby offering improved performance of the waste heat recovery system.

If the required output of the engine 5, that is, the monitored accelerator pedal position exceeds the aforementioned predetermined value, the controller 11A determines that required cooling load for compressed air exceeds the threshold. This is because it is necessary to increase the density of compressed air by cooling compressed air in order to supply a larger amount of compressed air to the engine and hence to increase the output of the engine 5. Then, the controller 11A adjusts the regulator valve 35 depending on the required cooling load for the compressed air exceeding the threshold. Specifically, the tube 28 is connected to the bypass passage 33 through the regulator valve 35 so that the flow rate of working fluid entering the expander 25 and the flow rate of working fluid entering the bypass passage 33 are adjusted.

The regulator valve 35 allows part of the working fluid exiting the boiler 23 to flow into the bypass passage 33, bypassing the expander 25. Such part of the working fluid flows through the tube 30 into the condenser 27. In this case, the Rankine cycle device 3A is operated in the manner that the state of the working fluid shifts from state A through state E, state F and state D' to state A (see Fig. 2). In this operation, the working fluid has evaporation pressure P2 that is lower than P3. As compared to the case that the Rankine cycle device 3A is operated under the evaporation pressure P3, the sensible heat region decreases and the latent heat region increases. Thus, the working fluid temperature does not increase in the latent heat region while heat exchange between the working fluid and the compressed air continues in the boiler 23, so that the working fluid can receive a larger amount of heat from the compressed air, which allows further cooling of the compressed air.

As shown in Fig. 3, the working fluid is heated from the temperature T1 only to a temperature of about 50 degrees C as indicated by line L3, and the compressed air of a temperature of about 150 degrees C is cooled to the temperature T2 that is lower than T3 as indicated by line L4. This allows a larger amount of compressed air to be supplied to the engine 5. In this case, due to the low evaporation pressure of the working fluid, the amount of pressure energy recovered in the expander 25 is reduced.

In the waste heat recovery system of the first embodiment, the boiler 23 functions as an intercooler for compressed air, which requires no additional intercooler for the system, resulting in reduced size and simplified structure of the system.

The waste heat recovery system also makes it possible for the controller 11A to properly determine the required cooling load for compressed air based on required output of the engine 5.

As described above, the waste heat recovery system of the first embodiment provides increased recovery of energy in the Rankine cycle device 3A and increased output of the engine 5 depending on the required output of the engine 5, thereby allowing easy installation in a vehicle and reduced manufacturing cost.

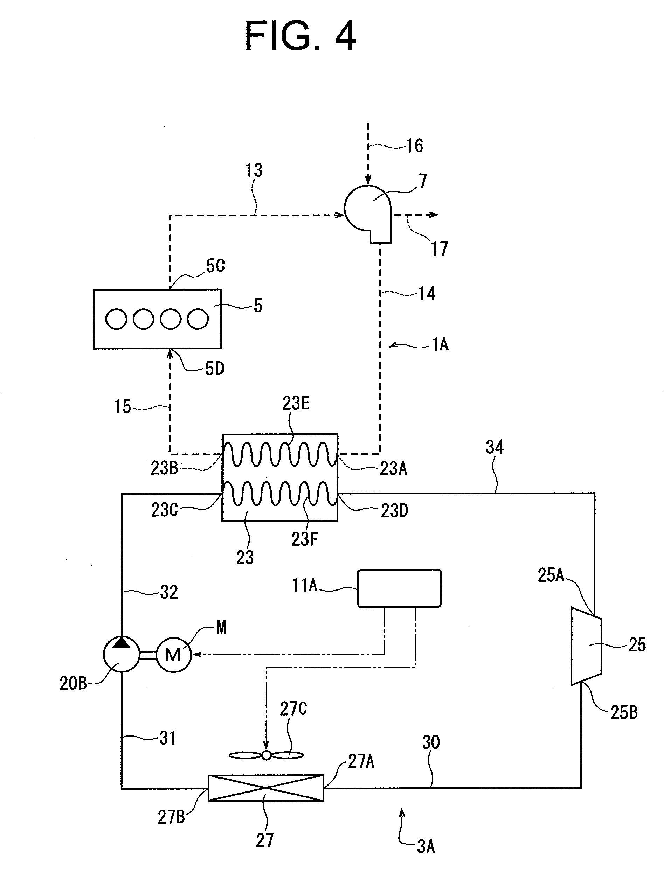

Fig. 4 shows the second embodiment of the waste heat recovery system. The second embodiment differs from the first embodiment in that a pump 20B driven by an electric motor M is used instead of the pump 20A of the first embodiment. The electric motor M is a variable speed motor controlled by the controller 11A. The controller 11A, the electric motor M and the pump 20B corresponds to the pressure reducing device, the flow rate changing device and the speed changing device of the present invention. The boiler 23 and the expander 25 are connected by a tube 34. An regulator valve such as 35 and a bypass passage such as 33 of the first embodiment are not provided. Other elements or components are similar to their counterpart elements or components of the first embodiment.

In the system of the second embodiment, if the controller 11A determines that the required cooling load for compressed air exceeds a predetermined threshold, the controller 11A cooperates with the electric motor M to decrease the speed of the pump 20B so that the flow rate of working fluid discharged from the pump 20B decreases. By doing so, the flow rate of the working fluid discharged from the pump 20B becomes relatively lower than that of the working fluid flowing into the expander 25, thereby reducing the evaporation pressure of the Rankine cycle device 3A.

Thus, the second embodiment also provides the advantages similar to those of the first embodiment.

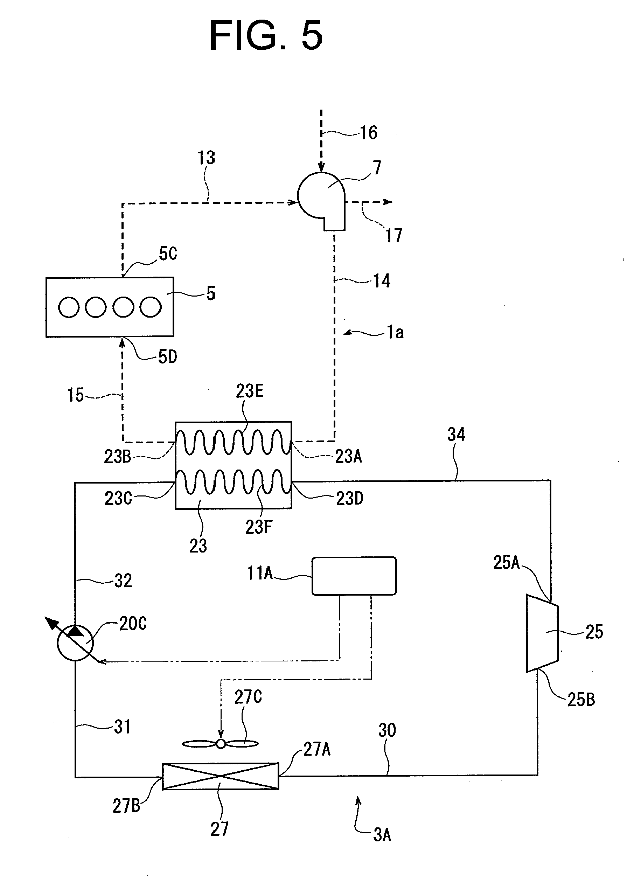

Fig. 5 shows the third embodiment of the waste heat recovery system. The third embodiment differs from the second embodiment in that a variable displacement pump 20C controlled by the controller 11A is used instead of the pump 20B of the second embodiment. The controller 11A and the pump 20C corresponds to the pressure reducing device, the flow rate changing device and the displacement changing device of the present invention. Other elements or components are similar to their counterpart elements or components of the second embodiment.

In the system of the third embodiment, if the controller 11A determines that the required cooling load for compressed air exceeds a predetermined threshold, the controller 11A causes the pump 20C to be operated so as to decrease its displacement, that is, to decrease the amount of fluid pumped per revolution of the pump 20C so that the flow rate of working fluid discharged from the pump 20C decreases. By doing so, the flow rate of the working fluid discharged from the pump 20C becomes relatively lower than that of the working fluid flowing into the expander 25, thereby reducing the evaporation pressure of the Rankine cycle device 3A.

Thus, the third embodiment also provides the advantages similar to those of the first embodiment.

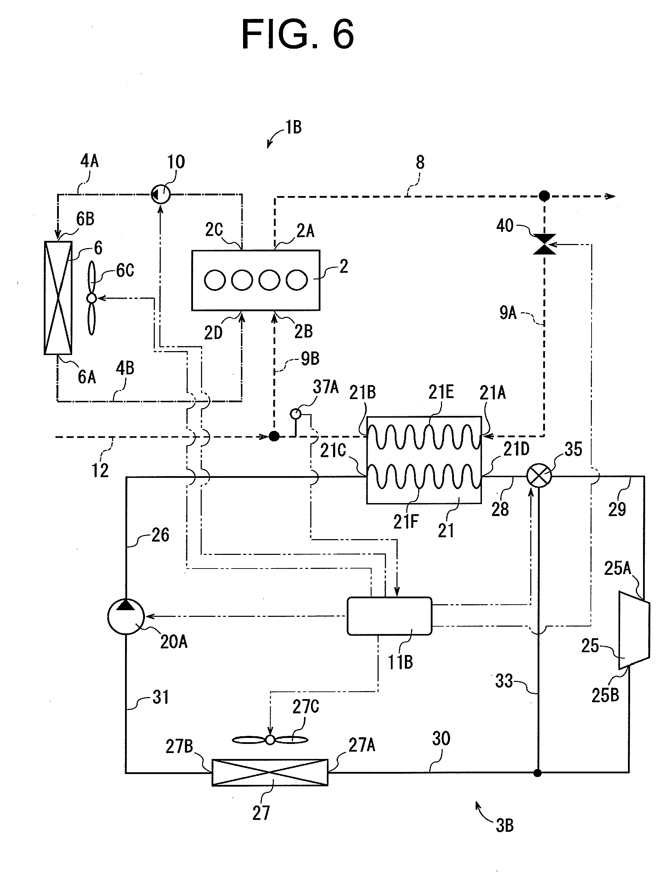

Fig. 6 shows the fourth embodiment of the waste heat recovery system. The waste heat recovery system of the fourth embodiment is also installed in a vehicle and used with a power unit 1B of the vehicle. The waste heat recovery system includes the bypass passage 33 and the regulator valve 35 as in the case of the first embodiment and further includes a Rankine cycle device 3B, a first temperature sensor 37A and a controller 11B. As in the first embodiment, the bypass passage 33 and the regulator valve 35 correspond to the pressure reducing device of the present invention, and the controller 11B corresponds to the determination device of the present invention.

The power unit 1B has an internal combustion engine 2, a tube 8, tubes 9A, 9B as an exhaust gas recirculation passage, a tube 12, tubes 4A, 4B, a radiator 6, and a pump 10. The tube 9A is provided with a regulator valve 40.

The engine 2 is a conventional water-cooled diesel engine having a water jacket (not shown) through which LLC or long life coolant flows. The engine 2 has an outlet 2A for discharging exhaust gas and an inlet 2B for introducing mixture which will be described later. The engine 2 further has an inlet 2D and an outlet 2C through which coolant flows into and out of the water jacket.

The radiator 6 has an inlet 6B and an outlet 6A through which engine coolant flows into and out of the radiator 6. In the radiator 6, heat exchange occurs between the coolant flowing therein and the outdoor air. A motor fan 6C is provided adjacent to the radiator 6 and electrically connected to the controller 11B.

The tube 8 is connected at one end thereof to the outlet 2A of the engine 2 and at the other end thereof to a muffler (not shown) of the vehicle. Exhaust gas exiting the engine 2 is delivered through the tube 8 to the muffler.

The tube 9A is connected at one end thereof to the tube 8 and at the other end thereof to a first inlet 21A of a boiler 21 which is described in detail below. The tube 9B is connected at one end thereof to a first outlet 21B of the boiler 21 and at the other end thereof to the inlet 2B of the engine 2.

The tube 12 is connected at one end thereof to the tube 9B and at the other end thereof to an air intake (not shown) of the vehicle. Outdoor air is introduced through the tube 12 to the tube 9B. Part of the exhaust gas flowing through the tube 8 is delivered through the tubes 9A, 9B, and mixture of such recirculation exhaust gas as intake fluid and intake air is introduced into the engine 2.

The regulator valve 40 is provided in the tube 9A and electrically connected to the controller 11B. The adjustment of the flow rate of the exhaust gas flowing from the tube 8 into the tube 9A is accomplished by adjusting the opening of the regulator valve 40. The regulator valve 40 is of a widely used type.

The first temperature sensor 37A is provided in the tube 9B and electrically connected to the controller 11B. The first temperature sensor 37A monitors the temperature of recirculation exhaust gas exiting the first outlet 21B of the boiler 21 and flowing through the tube 9B, and sends the monitored data to the controller 11B. The first temperature sensor 37A is of a widely used type.

The tube 4A is connected at one end thereof to the outlet 2C of the engine 2 and at the other end thereof to the inlet 6B of the radiator 6. The tube 4B is connected at one end thereof to the outlet 6A of the radiator 6 and at the other end thereof to the inlet 2D of the engine 2.

The pump 10 is an electrically operated pump similar to the pump 20A. The pump 10 is provided in the tube 4A and electrically connected to the controller 11B. The pump 10 may be provided in the tube 4B.

The Rankine cycle device 3B includes the pump 20A, the boiler 21, the expander 25, the condenser 27, a tube 26 and the tubes 28 to 31. The bypass passage 33 and regulator valve 35 are integrated in the Rankine cycle device 3B.

The boiler 21 has a second inlet 21C and a second outlet 21D, as well as the aforementioned first inlet 21A and first outlet 21B. The boiler 21 is formed therein with a first passage 21E connecting between the first inlet 21A and the first outlet 21B and a second passage 21F connecting between the second inlet 21C and the second outlet 21D. In the boiler 21, heat exchange occurs between the recirculation exhaust gas flowing in the first passage 21E and the working fluid flowing in the second passage 21F, so that the recirculation exhaust gas is cooled and the working fluid is heated.

The tube 26 connects between the pump 20A and the second inlet 21C of the boiler 21. The tube 28 connects between the second outlet 21D of the boiler 21 and the regulator valve 35. Other elements or components of the Rankine cycle device 3B are similar to their counterpart elements or components of the Rankine cycle device 3A of the first embodiment. Same reference numerals are used for the common elements or components in the first and fourth embodiments, and the description of such elements or components for the fourth embodiment will be omitted. In the Rankine cycle device 3B, the pump 20A causes working fluid to circulate at a constant flow rate through the boiler 21, the expander 25 and then through the condenser 27 which are connected by the tube 26 and the tubes 28 to 32, with the flow rate of the working fluid flowing into the expander 25 and the flow rate of the working fluid flowing into the bypass passage 33 adjusted by the regulator valve 35.

The controller 11B controls the operation of the fans 6C, 27C in such a way that the amount of heat released from the working fluid or the coolant into the outdoor air is properly adjusted. The controller 11B controls also the operation of the regulator valve 40 and the pumps 10, 20A. Based on the temperature of recirculation exhaust gas monitored by the first temperature sensor 37A, the controller 11B determines the required cooling load for cooling the recirculation exhaust gas. Based on the determined required cooling load, the controller 11B adjusts the regulator valve 35.

The following will describe the operation of the waste heat recovery system of the present embodiment.

While the engine 2 of the power unit 1B is operating to drive the vehicle, exhaust gas exiting the outlet 2A of the engine 2 is delivered through the tube 8 and discharged out from the muffler (not shown). The controller 11B adjusts the opening of the regulator valve 40 so that part of the exhaust gas in the tube 8 flows into the tube 9A. Exhaust gas flowing into the tube 9A, that is, the recirculation exhaust gas, flows into the boiler 21 through its first inlet 21A, flowing through the first passage 21E and then out of the boiler 21 through its first outlet 21B into the tube 9B. The recirculation exhaust gas flowing through the tube 9B is mixed with the outdoor air introduced through the tube 12, and such mixture enters into the engine 2 through its inlet 2B.

While the engine 2 is in operation, the controller 11B causes the pump 10 and the fan 6C to be operated. Coolant exiting the outlet 2C of the engine 2 and flowing through the tube 4A flows into the radiator 6 through its inlet 6B. Coolant is cooled in the radiator 6 by heat exchange with the outdoor air and then flows out of the radiator 6 through its outlet 6A into the tube 4B. Then coolant flowing in the tube 4B is introduced into the engine 2 through its inlet 2D to be used to cool the engine 2.

In the Rankine cycle device 3B, the controller 11B operates the pump 20A and the fan 27C. Based on the monitored data from the first temperature sensor 37A, the controller 11B determines the required cooling load for recirculation exhaust gas. If the temperature monitored by the first temperature sensor 37A is small, it can be determined that the recirculation exhaust gas is sufficiently cooled by the heat exchange in the boiler 21. Thus, the controller 11B determines that required cooling load for the recirculation exhaust gas is small, that is, the required cooling load is below a predetermined threshold. Then the controller 11B adjusts the regulator valve 35 so that tube 28 is connected to the tube 29 while the tubes 28, 29 are disconnected from the bypass passage 33.

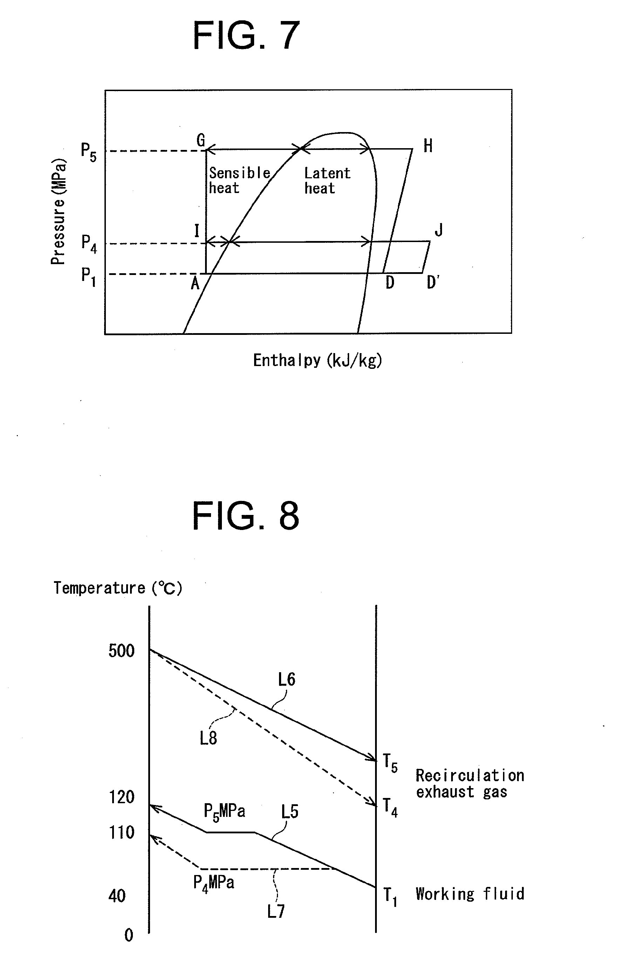

Working fluid in the tube 31 is pumped by the pump 20A into the tube 26. In this case, the state of the working fluid shifts from state A to state G along the isentrope, and the pressure of the working fluid becomes high, as shown in the diagram of Fig. 7. Referring back to Fig. 6, the working fluid flowing through the tube 26 then enters into the boiler 21, where heat exchange occurs between the working fluid and the recirculation exhaust gas flowing through the first passage 21E of the boiler 21. Since the recirculation exhaust gas has a temperature of about 500 degrees C, the working fluid flowing through the second passage 21F of the boiler 21 is heated to a level of a certain range. In this case, the state of the working fluid shifts from state G to state H along the isobar, and the working fluid has a high temperature and a high evaporation pressure P5 (see Fig. 7). This evaporation pressure P5 corresponds to a predetermined evaporation pressure in the waste heat recovery system. The recirculation exhaust gas flowing in the first passage 21E is cooled by releasing heat to the working fluid flowing in the second passage 21F, and then delivered to the engine 2.

After being heated by the boiler 21, high-temperature and high-pressure working fluid exiting the second outlet 21D flows through the tubes 28, 29 and enters the expander 25 through its inlet 25A. The working fluid is decompressed or expanded in the expander 25 thereby to generate pressure energy that is used to generate electric power in the dynamo connected to the expander 25. In this case, the state of the working fluid shifts from state H to state D along the isentrope, and the working fluid has a high temperature and a low condensation pressure P1 (see Fig. 7)

After being decompressed in the expander 25, the working fluid is cooled in the condenser 27 as in the case of the Rankine cycle device 3A of the first embodiment. The controller 11B controls the fan 27C so that the working fluid is suitably cooled and liquefied. In this case, the state of the working fluid shifts from state D to state A along the isobar (see Fig. 7).

In the operation in which the state of working fluid shifts from state A through state G, state H and state D to state A, while the state of working fluid shifts from state G to state H, the sensible heat region is long, and the latent heat region is short, as shown in Fig. 7. Referring to the diagram of Fig. 8, the working fluid is heated from temperature T1 to a temperature of about 120 degrees C through the line L5, and the recirculation exhaust gas of a temperature of about 500 degrees C is cooled to temperature T5 through the line L6. Thus, since the working fluid has high evaporation pressure, a larger amount of energy can be recovered in the Rankine cycle device 3B, thereby offering improved performance of the waste heat recovery system.

If the temperature monitored by the first temperature sensor 37A is large, it can be determined that cooling of recirculation exhaust gas in the boiler 21 is insufficient. The controller 11B determines that the required cooling load for the recirculation exhaust gas is large, that is, the required cooling load exceeds the threshold. Accordingly, the controller 11B adjusts the regulator valve 35 so as to connect the tube 28 to the bypass passage 33, so that the flow rate of working fluid flowing into the expander 25 and the flow rate of working fluid flowing into the bypass passage 33 are adjusted.

The regulator valve 35 allows part of the working fluid exiting the boiler 21 to flow into the bypass passage 33, bypassing the expander 25. Such part of the working fluid flows through the tube 30 into the condenser 27. In this case, the Rankine cycle device 3B is operated in the manner that the state of the working fluid shifts from state A through state I, state J and state D' to state A (see Fig. 7). In this operation, the working fluid has evaporation pressure P4 that is lower than P5. As compared to the case that the Rankine cycle device 3B is operated under the evaporation pressure P5, the sensible heat region decreases and the latent heat region increases. Thus, the working fluid temperature does not increase in the latent heat region while heat exchange between the working fluid and the recirculation exhaust gas continues in the boiler 21, so that the working fluid can receive a larger amount of heat from the recirculation exhaust gas, which allows further cooling of the recirculation exhaust gas.

As shown in Fig. 8, the working fluid is heated from the temperature T1 only to a temperature of about 110 degrees C as indicated by line L7, and the recirculation exhaust gas of a temperature of about 500 degrees C is cooled to the temperature T4 that is lower than T5 as indicated by line L8. Thus, mixture containing a higher percentage of recirculation exhaust gas, that is, a larger amount of recirculation exhaust gas can be recirculated into the engine 2. This results in an increased output of the engine 2 and a reduced amount of nitrogen oxides in the exhaust gas discharged from the muffler. Also in this case, due to the low evaporation pressure of the working fluid as in the first embodiment, the amount of pressure energy recovered in the expander 25 is reduced.

The waste heat recovery system of the fourth embodiment makes it possible for the controller 11B to properly determine the required cooling load for the recirculation exhaust gas based on the temperature of the recirculation exhaust gas monitored by the first temperature sensor 37A.

Thus, the waste heat recovery system of the fourth embodiment also offers increased recovery of energy in the Rankine cycle device 3B and improved performance of the power unit 1B.

The system provides sufficient cooling of recirculation exhaust gas in the boiler 21 and hence requires no additional boiler such as 21 and no additional cooling device for recirculation exhaust gas. This results in reduced size and simplified structure of the system, thereby allowing easy installation of the system in the vehicle.

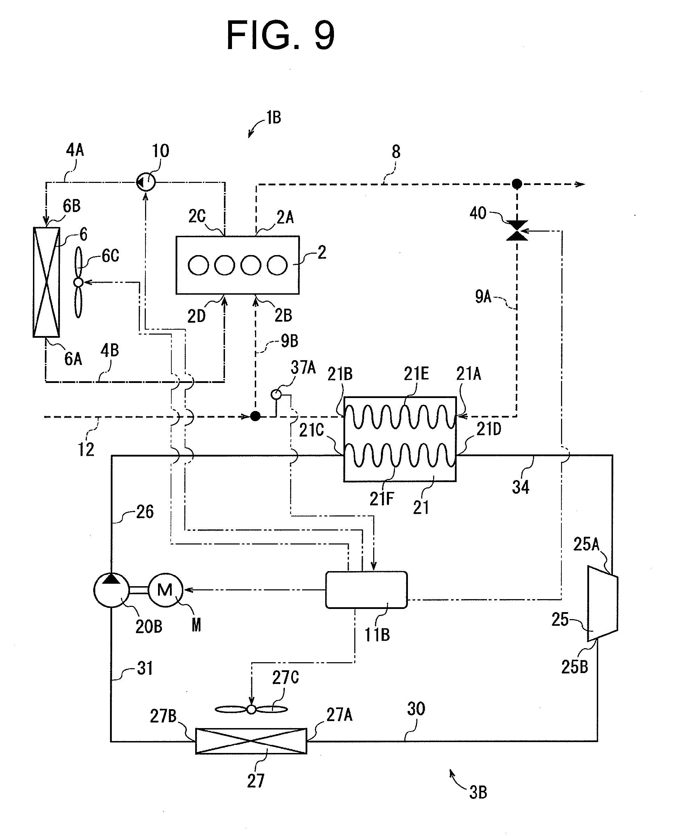

Fig. 9 shows the fifth embodiment of the waste heat recovery system. The fifth embodiment differs from the fourth embodiment in that the pump 20B driven by the electric motor M is used instead of the pump 20A of the fourth embodiment. The electric motor M is a variable speed motor controlled by the controller 11B. The controller 11B, the electric motor M and the pump 20B corresponds to the pressure reducing device, the flow rate changing device and the speed changing device of the present invention. The boiler 21 and the expander 25 are connected by the tube 34, as in the second embodiment. An regulator valve such as 35 and a bypass passage such as 33 of the first and fourth embodiments are not provided. Other elements or components are similar to their counterpart elements or components of the fourth embodiment.

In the system of the fifth embodiment, if the controller 11B determines that the required cooling load for recirculation exhaust gas exceeds a predetermined threshold based on the temperature monitored by the first temperature sensor 37A, the controller 11B cooperates with the electric motor M to decrease the speed of the pump 20B so that the flow rate of working fluid discharged from the pump 20B decreases. By doing so, the flow rate of the working fluid discharged from the pump 20B becomes relatively lower than that of the working fluid flowing into the expander 25, thereby reducing the evaporation pressure of the Rankine cycle device 3B.

Thus, the fifth embodiment also provides the advantages similar to those of the fourth embodiment.

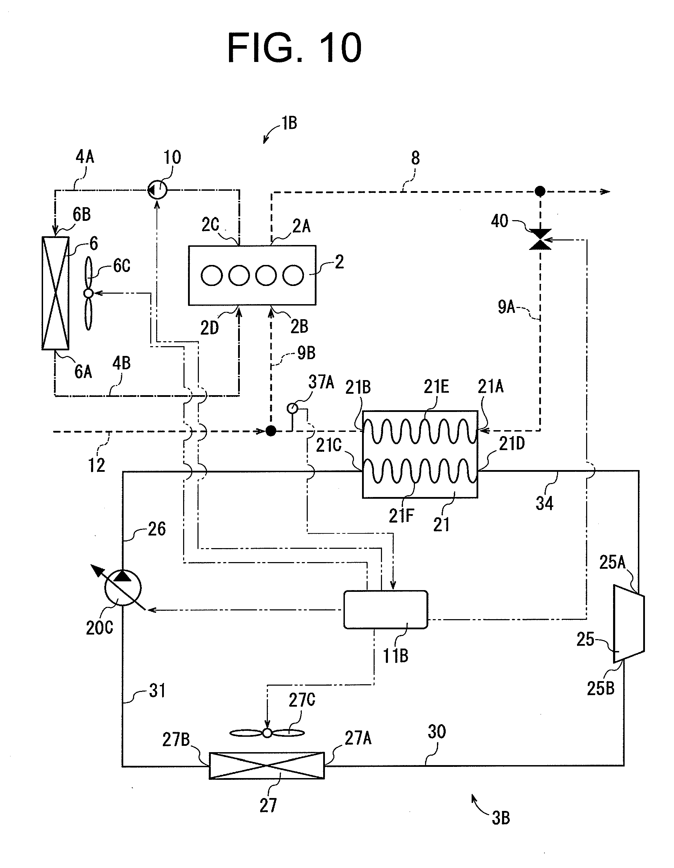

Fig. 10 shows the sixth embodiment of the waste heat recovery system. The sixth embodiment differs from the fifth embodiment in that the variable displacement pump 20C controlled by the controller 11B is used instead of the pump 20B of the fifth embodiment. The controller 11B and the pump 20C corresponds to the pressure reducing device, the flow rate changing device and the displacement changing device of the present invention. Other elements or components are similar to their counterpart elements or components of the fifth embodiment.

In the system of the sixth embodiment, if the controller 11B determines that the required cooling load for recirculation exhaust gas exceeds a predetermined threshold based on the temperature monitored by the first temperature sensor 37A, the controller 11B causes the pump 20C to be operated so as to decrease its displacement, that is, to decrease the amount of fluid pumped per revolution of the pump 20C so that the flow rate of working fluid discharged from the pump 20C decreases. By doing so, the flow rate of the working fluid discharged from the pump 20C becomes relatively lower than that of the working fluid flowing into the expander 25, thereby reducing the evaporation pressure of the Rankine cycle device 3B.

Thus, the sixth embodiment also provides the advantages similar to those of the fourth embodiment.

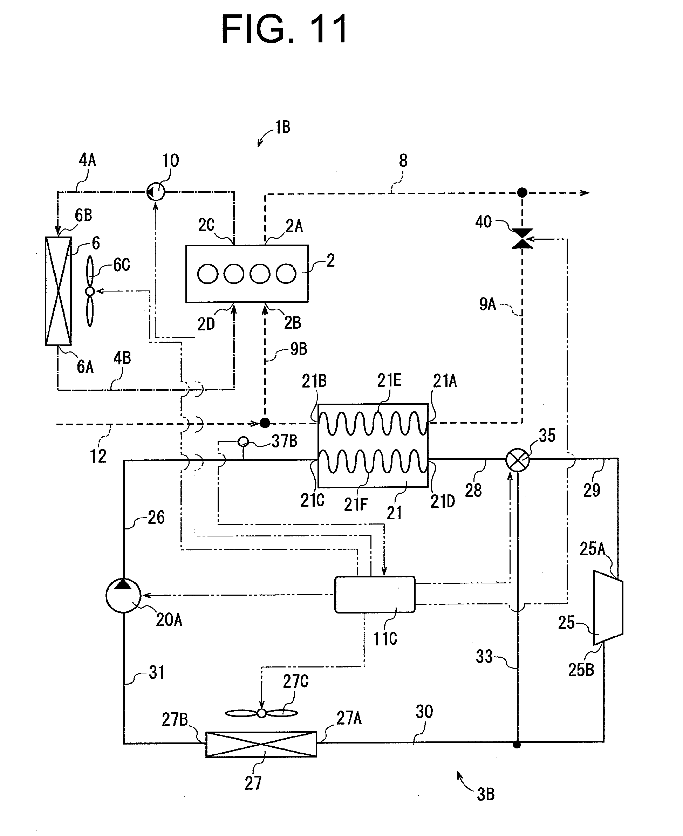

Fig. 11 shows the seventh embodiment of the waste heat recovery system. The seventh embodiment differs from the fourth embodiment in that a controller 11C and a second temperature sensor 37B are used instead of the controller 11B and the first temperature sensor 37A, respectively, of the fourth embodiment.

The second temperature sensor 37B is provide in the tube 26 and electrically connected to the controller 11C. The second temperature sensor 37B monitors the temperature of working fluid flowing through the tube 26, that is, the temperature of working fluid entering the second inlet 21C of the boiler 21. The second temperature sensor 37B sends the monitored data to the controller 11C. The second temperature sensor 37B is of a widely used type similar to the first temperature sensor 37A.

The controller 11C determines the required cooling load for the recirculation exhaust gas based on the working fluid temperature monitored by the second temperature sensor 37B. Specifically, if the working fluid temperature exceeds a predetermined value, the capacity of the boiler 21 for cooling recirculation exhaust gas becomes lower and hence the required cooling load for the recirculation exhaust gas becomes relatively larger. The controller 11C controls the regulator valve 35 based on such required cooling load. The controller 11C corresponds to the determination device of the present invention. Other elements or components are similar to their counterpart elements or components of the fourth embodiment.

If the temperature monitored by the second temperature sensor 37B is small, the controller 11C determines that the required cooling load for the recirculation exhaust gas is below a predetermined threshold, that is, the required cooling load for recirculation exhaust gas is small. The controller 11C controls the regulator valve 35 so that the tubes 28, 29 are disconnected from the bypass passage 33, as in the case of the fourth embodiment.

On the other hand, if the temperature monitored by the second temperature sensor 37B is large, in other words, if the working fluid temperature entering the boiler 21 is high, the controller 11C determines that required cooling load for recirculation exhaust gas is large. Then, if the controller 11C determines that required cooling load for the recirculation exhaust gas exceeds the threshold based on the temperature monitored by the second temperature sensor 37B, the controller 11C controls the regulator valve 35 so that the tubes 28, 29 are connected to the bypass passage 33, thereby reducing the evaporation pressure of the Rankine cycle device 3B in the waste heat recovery system.

The waste heat recovery system of the seventh embodiment makes it possible for the controller 11C to properly determine the required cooling load for the recirculation exhaust gas based on the temperature of the recirculation exhaust gas monitored by the second temperature sensor 37B.

Thus, the seventh embodiment also provides the advantages similar to those of the fourth embodiment.

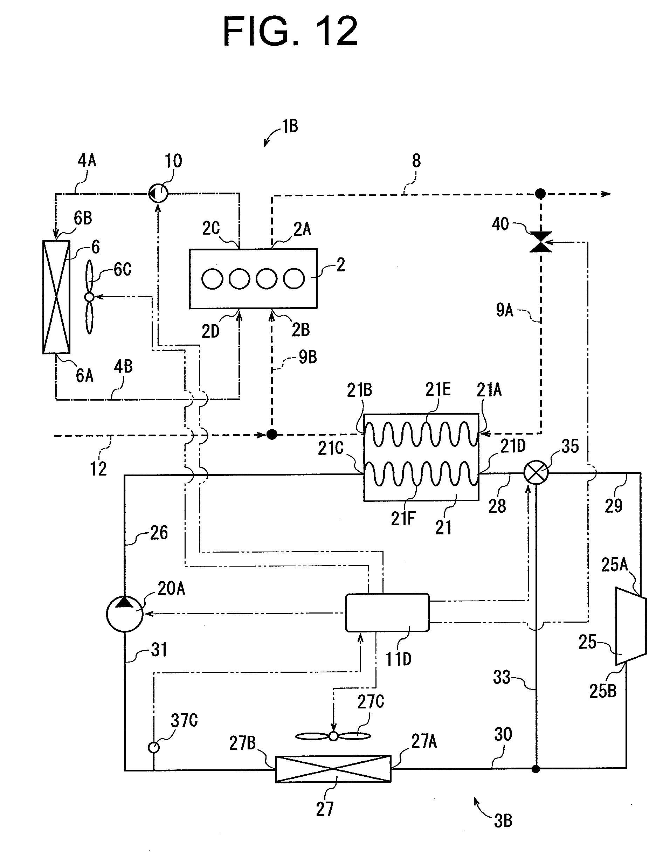

Fig. 12 shows the eighth embodiment of the waste heat recovery system. The eighth embodiment differs from the fourth embodiment in that a controller 11D and a third temperature sensor 37C are used instead of the controller 11C and the first temperature sensor 37A, respectively, of the fourth embodiment.

The third temperature sensor 37C is provide in the tube 31 and electrically connected to the controller 11D. The third temperature sensor 37C monitors the temperature of working fluid flowing through the tube 31, that is, the temperature of working fluid entering the pump 20A. The third temperature sensor 37C sends the monitored data to the controller 11D. The third temperature sensor 37C is of a widely used type similar to the first temperature sensor 37A.

The controller 11D determines the required cooling load for the recirculation exhaust gas based on the working fluid temperature monitored by the third temperature sensor 37C. The controller 11D controls the regulator valve 35 based on such required cooling load. The controller 11D corresponds to the determination device of the present invention. Other elements or components are similar to their counterpart elements or components of the fourth embodiment.

If the temperature monitored by the third temperature sensor 37C is small, the controller 11D determines that the required cooling load for the recirculation exhaust gas is below a predetermined threshold, that is, the required cooling load for recirculation exhaust gas is small. The controller 11D controls the regulator valve 35 so that the tubes 28, 29 are disconnected from the bypass passage 33, as in the case of the fourth embodiment.

On the other hand, if the temperature monitored by the third temperature sensor 37C is large, in other words, if the working fluid temperature entering the pump 20A is high, the controller 11D determines that the required cooling load for the recirculation exhaust gas is large. This is because when the temperature of working fluid entering the pump 20A is high, it can be determined that the recirculation exhaust gas as a heat source has a high temperature and the working fluid is heated to a high temperature in the boiler 21 by such high-temperature recirculation exhaust gas. Then, if the controller 11D determines that required cooling load for the recirculation exhaust gas exceeds the threshold based on the temperature monitored by the third temperature sensor 37C, the controller 11D controls the regulator valve 35 so that the tubes 28, 29 are connected to the bypass passage 33, thereby reducing the evaporation pressure of the Rankine cycle device 3B in the waste heat recovery system.

The waste heat recovery system of the eighth embodiment makes it possible for the controller 11D to properly determine the required cooling load for the recirculation exhaust gas based on the temperature of the recirculation exhaust gas monitored by the third temperature sensor 37C.

Thus, the eighth embodiment also provides the advantages similar to those of the fourth embodiment.

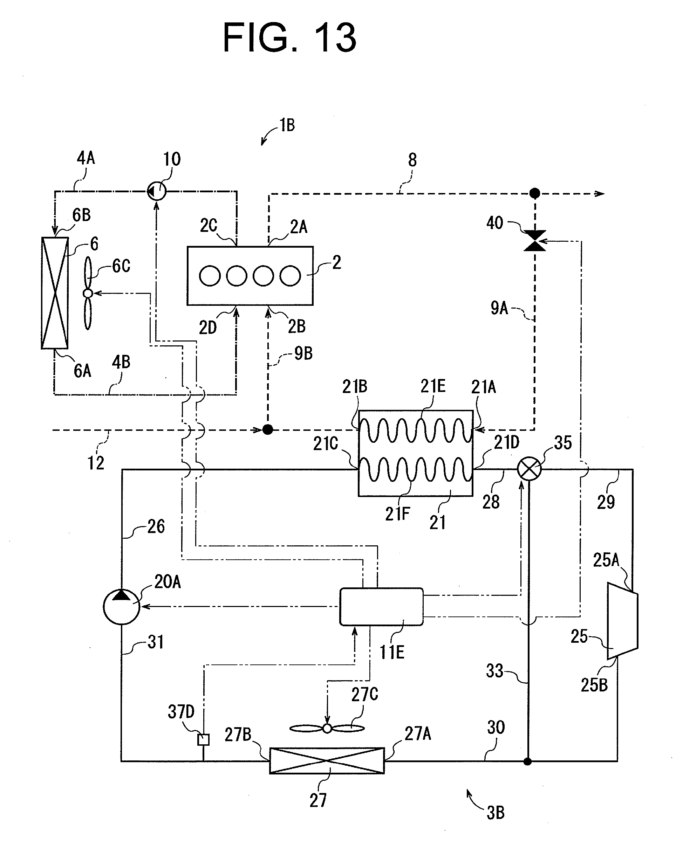

Fig. 13 shows the ninth embodiment of the waste heat recovery system. The ninth embodiment differs from the fourth embodiment in that a controller 11E and a pressure sensor 37D are used instead of the controller 11B and the first temperature sensor 37A, respectively, of the fourth embodiment.

The pressure sensor 37D is provide in the tube 31 and electrically connected to the controller 11E. The pressure sensor 37D monitors the pressure of working fluid flowing through the tube 31, that is, the pressure of the working fluid present downstream of the expander 25 and upstream of the pump 20A (condensation pressure). The pressure sensor 37D sends the monitored data to the controller 11E. The pressure sensor 37D is of a widely used type.

The controller 11E determines the required cooling load for the recirculation exhaust gas based on the condensation pressure of working fluid monitored by the pressure sensor 37D. The controller 11E controls the regulator valve 35 based on such required cooling load. The controller 11E corresponds to the determination device of the present invention. Other elements or components are similar to their counterpart elements or components of the fourth embodiment.

If the pressure monitored by the pressure sensor 37D is low, the controller 11E determines that required cooling load for the recirculation exhaust gas is below a predetermined threshold, that is, the required cooling load for the recirculation exhaust gas is small. This is because if the monitored data from the pressure sensor 37D is small, it can be determined that the temperature of the working fluid flowing through the tube 31 is low and, therefore, the temperature of the recirculation exhaust gas as a heat source in the boiler 21 is not high. In such a case, the controller 11E controls the regulator valve 35 so that the tubes 28, 29 are disconnected from the bypass passage 33, as in the case of the fourth embodiment.

On the other hand, if the pressure monitored by the pressure sensor 37D is high, in other words, if the condensation pressure of the working fluid present downstream of the expander 25 and upstream of the pump 20A is high, the controller 11E determines that the required cooling load for the recirculation exhaust gas is high. This is because if the condensation pressure of working fluid exiting the condenser 27 and flowing through the tube 31 is high, it can be determined that the working fluid is heated to a high temperature in the boiler 21 and, therefore, the recirculation exhaust gas has a high temperature. Then, if the controller 11E determines that required cooling load for the recirculation exhaust gas exceeds the threshold based on the pressure monitored by the pressure sensor 37D, the controller 11E controls the regulator valve 35 so that the tubes 28, 29 are connected to the bypass passage 33, thereby reducing the evaporation pressure of the Rankine cycle device 3B in the waste heat recovery system.

The waste heat recovery system of the ninth embodiment makes it possible for the controller 11E to properly determine the required cooling load for the recirculation exhaust gas based on the condensation pressure of working fluid monitored by the pressure sensor 37D.

Thus, the ninth embodiment also provides the advantages similar to those of the fourth embodiment.

It is to be understood that the present invention is not limited to the above-described embodiments, but it may be modified in various ways without departing from the scope of the invention.

The waste heat recovery system of the first, second and third embodiments may be provided with any of sensors 37A to 37D so that the controller 11A determines the required cooling load for the compressed air based on the temperature or pressure monitored by the sensor. Similarly, the waste heat recovery system of the fifth and sixth embodiments may be provided with any of sensors 37A to 37D so that the controller 11B determines the required cooling load for the recirculation exhaust gas based on the temperature or pressure monitored by the sensor.

In the waste heat recovery system of the fourth, fifth and sixth embodiments, the controller 11B may determine the required cooling load for the recirculation exhaust gas based on the required output of the engine 2 which may be determined from the accelerator pedal position of the vehicle.

In the first to ninth embodiments, the controllers 11A to 11E may be configured to determine the required cooling load for the compressed air or the recirculation exhaust gas based on vehicle speed. In such a case, if the vehicle speed exceeds a predetermined value, heat is suitably released from the working fluid in the condenser 27, so that the temperature of the working fluid flowing in the tube 31 is decreased. In other words, the condensation pressure of the working fluid flowing in the tube 31 is then decreased. In this case, the compressed air can be suitably cooled in the boiler 23, and the recirculation exhaust gas is also suitably cooled in the boiler 21. Thus, the controllers 11A to 11E can determine that required cooling load for the compressed air or the recirculation exhaust gas is small. On the other hand, if the vehicle speed is below a predetermined value, the capacity of the condenser 27 for cooling the working fluid becomes lower and hence the temperature of the working fluid flowing in the tube 31, that is, the condensation pressure is increased. In this case, the compressed air cannot be cooled sufficiently in the boiler 23, and the recirculation exhaust gas cannot be cooled sufficiently in the boiler 21, either. Thus, the controllers 11A to 11E can determine that the required cooling load for the compressed air or the recirculation exhaust gas is large.

In the first to ninth embodiments, the waste heat recovery system may be provided with a sensor for monitoring the temperature of the compressed air entering the boiler 23 or of the recirculation exhaust gas entering the boiler 21 so that the controllers 11A to 11E determine the required cooling load for the compressed air or the recirculation exhaust gas based on the temperature monitored by such sensor. In this case, if the temperature of the compressed air entering the boiler 23 or the temperature of the recirculation exhaust gas entering the boiler 21 is high, the temperature of the compressed air exiting the boiler 23 or the temperature of the recirculation exhaust gas exiting the boiler 21 is also high. Thus, the controllers 11A to 11E can determine that the required cooling load for the compressed air or the recirculation exhaust gas is large.

In the first to ninth embodiments, the controllers 11A to 11E may be configured to determine that the required cooling load for the compressed air or for the recirculation exhaust gas based on any suitable combination of the required output of the engine 2, 5, the temperature monitored by any of the first, second and third temperature sensors 37A, 37B and 37C, the pressure monitored by the pressure sensor 37D, the vehicle speed, the temperature of the compressed air entering the boiler 23, and the temperature of the recirculation exhaust gas entering the boiler 21.

The first to ninth embodiments may be combined appropriately. A variable speed expander or a variable displacement expander may be used instead of the expander 25.

In the first, fourth, seventh, eighth and ninth embodiments, the regulator valve 35 may be replaced by a three-way valve that can connect the tube 28 selectively to the bypass passage 33 or to the tube 29. In this case, if the required cooling load for the compressed air or for the recirculation exhaust gas exceeds a predetermined threshold, the valve is adjusted so that the tube 28 is connected to the bypass passage 33 while the tube 28 is disconnected from the tube 29.

The present invention is applicable to a vehicle.

A waste heat recovery system is for use with a power unit that includes an internal combustion engine. The waste heat recovery system includes a Rankine cycle device in which working fluid circulates through a pump, a boiler, an expander and then through a condenser, heat exchange occurs in the boiler between the working fluid and intake fluid that is introduced into the internal combustion engine while being cooled, a determination device for determining required cooling load for the intake fluid, a pressure reducing device for reducing evaporation pressure in the Rankine cycle device, and a controller for controlling the pressure reducing device so as to reduce the evaporation pressure below a predetermined evaporation pressure if the required cooling load determined by the determination device exceeds a threshold.

## Claims

1. A waste heat recovery system for use with a power unit (1A, 1B) that includes an internal combustion engine (2, 5), comprising:
a Rankine cycle device (3A, 3B) in which working fluid circulates through a pump (20A, 20B, 20C), a boiler (21, 23), an expander (25) and then through a condenser (27), heat exchange occurs in the boiler (21, 23) between the working fluid and intake fluid that is introduced into the internal combustion engine (2, 5) while being cooled;
**characterized by**
a determination device (11A, 11B, 11C, 11D, 11E) for determining required cooling load for the intake fluid;
a pressure reducing device (33, 35, 11A, 11B, M, 20B, 20C) for reducing evaporation pressure in the Rankine cycle device (3A, 3B); and
a controller (11A, 11B, 11C, 11D, 11E) for controlling the pressure reducing device (33, 35, 11A, M, 20B, 20C) so as to reduce the evaporation pressure below a predetermined evaporation pressure if the required cooling load determined by the determination device (11A, 11B, 11C, 11D, 11E) exceeds a threshold.

2. The waste heat recovery system according to claim 1, wherein the pressure reducing device includes a bypass passage (33) bypassing the expander (25) at a position downstream of the boiler (21, 23), and a regulator valve (35) adjusting the flow rate of the working fluid entering the expander (25) and the flow rate of the working fluid entering the bypass passage (33).

3. The waste heat recovery system according to claim 1, wherein the pressure reducing device is provided by a flow rate changing device that serves to change the ratio of the flow rate of the working fluid entering the expander (25) to the flow rate of the working fluid discharged from the pump (20B, 20C).

4. The waste heat recovery system according to claim 3, wherein the flow rate changing device is provided by a speed changing device (11A, 11B, M, 20B) that serves to change the speed of at least either one of the pump (20B) and the expander (25).

5. The waste heat recovery system according to claim 3, wherein the flow rate changing device is provided by a displacement changing device (11A, 11B, 20C) that serves to change the displacement of at least either one of the pump (20C) and the expander (25).

6. The waste heat recovery system according to any one of claims 1 through 5, further comprising a sensor (11A) for monitoring required output of the internal combustion engine (5), wherein the determination device (11A) determines the required cooling load for the intake fluid based on the required output monitored by the sensor (11A).

7. The waste heat recovery system according to any one of claims 1 through 5, further comprising a sensor (37A) for monitoring the temperature of the intake fluid exiting the boiler (21), wherein the determination device (11B) determines the required cooling load for the intake fluid based on the temperature monitored by the sensor (37A).

8. The waste heat recovery system according to any one of claims 1 through 5, further comprising a sensor (37B) for monitoring the temperature of the working fluid entering the boiler (21), wherein the determination device (11C) determines the required cooling load for the intake fluid based on the temperature monitored by the sensor (37B).

9. The waste heat recovery system according to any one of claims 1 through 5, further comprising a sensor (37C) for monitoring the temperature of the working fluid entering the pump (20A), wherein the determination device (11D) determines the required cooling load for the intake fluid based on the temperature monitored by the sensor (37C).

10. The waste heat recovery system according to any one of claims 1 through 5, further comprising a sensor (37D) for monitoring the pressure of the working fluid present downstream of the expander (25) and upstream of the pump (20A), wherein the determination device (11E) determines the required cooling load for the intake fluid based on the pressure monitored by the sensor (37D).

11. The waste heat recovery system according to claim 1, wherein the power unit (1A) has a forced-induction compressor (7) for supplying compressed air to the internal combustion engine (5), and heat exchange between the compressed air and the working fluid occurs in the boiler (23).

12. The waste heat recovery system according to claim 1, wherein the power unit (1B) has an exhaust gas recirculation passage (9A, 9B) through which part of the exhaust gas exiting the internal combustion engine (2) is recirculated into the internal combustion engine (2) as recirculation exhaust gas, and heat exchange between the recirculation exhaust gas and the working fluid occurs in the boiler (21).
